Europäisches Patentamt

European Patent Office

Office européen des brevets

(11) Publication number: **0 299 538**
**A2**

## EUROPEAN PATENT APPLICATION

(21) Application number: 88111552.1

(51) Int. Cl.⁴: **G06F 9/46**

(22) Date of filing: 18.07.88

(30) Priority: 17.07.87 JP 178218/87

(43) Date of publication of application:
**18.01.89 Bulletin 89/03**

(84) Designated Contracting States:
**DE FR GB**

(71) Applicant: **NEC CORPORATION**
**33-1, Shiba 5-chome, Minato-ku**
**Tokyo 108(JP)**

(72) Inventor: **Mizuhashi, Yukiko c/o NEC**
**Corporation**
**33-1, Shiba 5-chome**
**Minato-ku Tokyo(JP)**

(74) Representative: **Vossius & Partner**
**Siebertstrasse 4 P.O. Box 86 07 67**
**D-8000 München 86(DE)**

(54) Unified switching between an invariable and a variable priority task.

(57) In a task switching arrangement including a task execution queue (21) having a plurality of priority levels, a queuing and selecting device (29) queues variable priority tasks of a group (17) in a first predetermined level (36) by selecting the predetermined level from the priority levels. When put into execution, one of the variable priority tasks is given a higher priority degree than other variable priority tasks of the group. When this one of the variable priority tasks becomes an interrupted task (31) with its execution interrupted, the queuing and selecting device queues the interrupted task in a second predetermined level (37) selected from the priority levels higher than the first predetermined level. The arrangement can deal with such variable priority tasks of a plurality of groups like invariable priority tasks which are concurrently present in a memory (11) and are queued, when put in an execution waiting state, in selected levels of the priority levels. If the invariable priority tasks include a particular task, the queuing and selecting device queues the particular task in a particular level of the priority levels with the first and the second predetermined levels preferably selected lower and higher than the particular level.

FIG. 2

# UNIFIED SWITCHING BETWEEN AN INVARIABLE AND A VARIABLE PRIORITY TASK

## BACKGROUND OF THE INVENTION:

This invention relates to a task switching or managing arrangement for use in an information processing system capable of executing a plurality of tasks in a time division fashion.

It is possible in connection with such a task switching arrangement to understand that each task is in one of an execution state, a waiting state, and interrupted state, and a sleeping state at a time. In the execution state, the task is subjected to execution. In the waiting state, the task waits execution after having become executable. In the interrupted state, the task was previously subjected to execution to a certain extent of execution and waits restart, after the execution is interrupted, of the execution from that extent. In the sleeping state, the task is in none of the three other states. That is, the task has not yet become executable after having been formed. Alternatively, the task is subjected to execution to its full extent, namely, to an end.

The tasks are divisible into invariable priority tasks and at least one group of variable priority tasks. The invariable priority tasks have priority degrees which are invariable with time unless forcibly or positively changed. The variable priority tasks of each group have such an invariable priority degree in common as a common priority degree and, in addition, variable priority degrees which are individually variable with time without regard to the common priority degree and irrespective of the states of the respective variable priority tasks. The variable priority tasks of each group are simultaneously put into the waiting state and individually into each of the execution, the interrupted, and the sleeping states.

A conventional task switching arrangement will now be described briefly and will be described a little more in detail later in the description. The task switching arrangement comprises a task execution queue and a queuing and selecting device. The task execution queue has a plurality of priority levels. Those of the invariable priority tasks which are in the waiting state, will be called waiting tasks. The queuing and selecting device is alternatively referred to either as an invariable priority task switching device or briefly as a switching device.

The switching device is coupled to the task execution queue and queues the waiting tasks in selected levels as queued tasks with the selected levels selected from the priority levels according to the invariable priority degrees of the respective waiting tasks. The switching device successively selects the queued tasks for execution from the queued task queued in a highest one of the selected levels towards the queued task queued in a lower one of the selected levels. The task previously queued in the highest selected level, is dequeued from the task execution queue by the switching device when put into the execution state. The highest selected level thereupon becomes empty if only one task is queued before selected for execution and put into the sleeping state. In other words, the highest selected level becomes in this event none of the selected levels. Another selected level which was previously next to the highest selected level among the priority levels, becomes a new highest one of the selected levels. The switching device therefore selects, as a selected task for execution, the queued task queued in one of the selected levels that becomes highest of the selected levels. The selected task is executed with a next previously executed task switched to the selected task.

Attention will be directed to one group of variable priority tasks. A task scheduler administrates or manages the variable priority tasks of the group. The switching device queues the task scheduler in the task execution queue when the variable priority tasks of the group are put in the waiting state. On switching one of the invariable priority tasks to a certain one of the variable priority tasks, the switching device selects at first the task scheduler. Subsequently, the task scheduler selects one of the variable priority tasks as the selected task that has a highest variable priority degree among the variable priority tasks when the task scheduler is selected. It has therefore been impossible to unifiedly deal with the invariable and the variable priority tasks.

It will be assumed that a variable priority task is in the execution state. During execution, the variable priority task may become to have a lower priority degree than an invariable priority task. Switching to the invariable priority task from the variable priority task being executed, is prohibited until the variable priority task under consideration is put into the sleeping state. A time delay has therefore been inevitable on switching such a variable priority task to an invariable priority task.

## SUMMARY OF THE INVENTION:

It is therefore an object of the present invention to provide a task switching arrangement capable of unifiedly dealing with invariable and variable priority tasks.

It is another object of this invention to provide a task switching arrangement of the type described, which can switch a variable priority task to an invariable priority task with little time delay when the variable priority task becomes to have a lower priority degree than the invariable priority task.

Other objects of this invention will become clear as the description proceeds.

On describing the gist of this invention, it is possible to understand that a task switching arrangement is for use in an information processing system capable of executing a plurality of tasks in a time division fashion. The tasks include a group of variable priority tasks having priority degrees variable with time. The task switching arrangement comprises a task execution queue having a plurality of priority levels and queuing and selecting means coupled to the task execution queue for queuing in selected levels as queued tasks invariable priority tasks having invariable priority degrees and waiting execution with the selected levels selected from the priority levels according to the respective invariable priority degrees and for selecting as a selected task for execution the queued task queued in one of the selected levels that becomes highest of the selected levels.

According to this invention, the above-understood task switching arrangement is characterized in that the queuing and selecting means is for furthermore queuing the group of variable priority tasks in a first predetermined level and an interrupted task in a second predetermined level with the first and the second predetermined levels selected from the priority levels lower and higher relative to each other, the interrupted task being one of the variable priority tasks that is in an interrupted state, the queuing and selecting means selecting the variable priority tasks of the group collectively as the selected task and the interrupted task as the selected task when the first and the second predetermined levels become higher, respectively, than the slected levels.

BRIEF DESCRIPTION OF THE DRAWING:

Fig. 1 is a block diagram of an information processing system including a conventional task switching arrangement;

Fig. 2 is a block diagram of an information processing system which includes a task switching arrangement according to a first embodiment of the instant invention;

Fig. 3 shows a time chart for use in describing operation of the task switching arrangement illustrated in Fig. 2;

Fig. 4 shows, in blocks, a part of the information processing system which is depicted in Fig. 2 and is put into operation in a different manner;

Fig. 5 is a partial block diagram of an information processing system which includes a task switching arrangement according to a second embodiment of this invention; and

Fig. 6 is a block diagram of an information processing system which includes a task switching arrangement according to a third embodiment of this invention.

DESCRIPTION OF THE PREFERRED EMBODIMENTS:

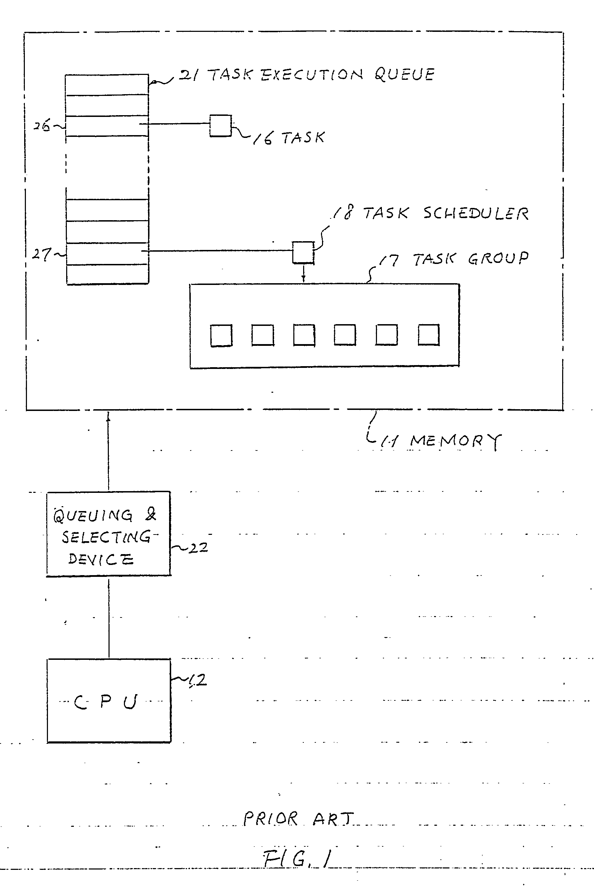

Referring to Fig. 1, a conventional task switching or managing arrangement will be described at first along with an information processing system in order to facilitate an understanding of the present invention. The information processing system comprises a memory 11 and a central processing unit 12. The information processing system is for executing in a time division fashion a plurality of tasks formed in the memory 11. In the manner described heretobefore, it is possible to understand that each task is in one of the execution, the waiting, the interrupted, and the sleeping states at a time. The tasks are divisible into invariable priority tasks, such as an invariable priority task 16, having the invariable priority degrees and a group 17 of varialbe priority tasks which have, besides the common priority degree, the variable priority degrees and are simultaneously put in the waiting state and individually in each of the execution, the interrupted, and the sleeping states. The execution, the waiting, the interrupted, and the sleeping states and the invariable, the common, and the variable priority degrees are already described hereinabove.

A task scheduler 18 is coupled to the variable priority task group 17 for administrating or managing the variable priority tasks of the group 17. The task scheduler 18 is often called a supervisor process in the art.

The task switching arrangement comprises a task execution queue 21 in the memory 11. The task execution queue 21 has a plurality of priority levels, each depicted in the task execution queue 21 between two adjacent horizontal lines. Some or all of the invariable priority tasks are the waiting tasks defined hereinabove. A queuing and selecting device 22 is coupled to the task execution queue 21. The queuing and selecting device 22 is herein alternatively referred to either as an invariable priority task switching device or briefly as a switching device. It is possible to implement the switching device 22 by an operating system which runs on the central processing unit 12. Alternatively, the switching device 22 is implemented by hardware controlled by the central processing unit 12.

The switching device 22 is for queuing the waiting tasks in selected levels as queued tasks with the selected levels selected from the priority levels according to the invariable priority degrees of the respective waiting tasks. It is presumed in the figure that the invariable priority task 16 is a waiting task and is queued in a selected level 26 of the task execution queue 21. The switching device 22 furthermore queues the task scheduler 18 in a like selected level when the variable priority task of the group 17 are put in the waiting state. In the example being illustrated, the task scheduler 18 is queued in another selected level 27 of the priority levels. The selected levels 26 and 27 will be called first and second selected levels for convenience of reference.

Furthermore, the switching device 22 is for successively selecting the queued tasks for execution from the queued task queued in a highest one of the selected levels towards the queued task queued in a lower one of the selected levels. It will be assumed that the priority levels above the first selected level 26 are empty, namely, that the first selected level 26 is the highest selected level. The switching device 22 dequeues the invariable priority task 16 from the first selected level 26. The invariable priority task 16 is subjected to execution, that is, put in the execution state. When the execution proceeds to its full extent, namely, comes to an end, the invariable priority task 16 is put in the sleeping state. The first selected level 16, which was previously the highest selected level. becomes empty in this manner and becomes a mere priority level, namely, none of the selected levels. If the priority levels are empty between the second selected level 17 and the priority level 26 which was previously the highest selected level and is now empty, the second selected level 27 becomes a new highest selected level. The switching device 22 selects under the circumstances the task scheduler 18, which selects one of the variable priority tasks of the group 17 that has a highest variable priority degree at this moment of time. The selected variable priority task is put in the execution state and eventually in the sleeping state.

In this manner, the switching device 22 selects as a selected task for execution the queued task queued in one of the selected levels that becomes highest of the selected levels. The switching device 22 selects the task scheduler 18 when the highest selected level shifts downwardly of the task execution queue 21 to the second selected level 27 in which the task scheduler 18 is queued. Inasmuch as the task scheduler 18 selects one of the variable priority tasks of the group 17, it is possible to understand that the switching device 22 selects a selected task even though the switching device 22 selects the task scheduler 18. The selected task is thereupon executed with a next previously executed task switched to the selected task.

The fact is, however, that the variable priority tasks of the group 17 are administrated by the task scheduler 18 and are indirectly queued in the task execution queue 21 whereas the invariable priority tasks are directly queued in the task execution queue 21 when put in the waiting state. The conventional task switching arrangement is therefore incapable of unifiedly dealing with the invariable and the variable priority tasks.

It will be assumed that a variable priority task is in the execution state in the manner described above. During execution, the variable priority task may become to have a lower priority degree than an invariable priority task. It appears preferable in this event to interrupt execution of the variable priority task for restart of the execution, as soon as the invariable priority task is put in the sleeping state, from an extent to which the execution of the variable priority task proceeded when interrupted. Another variable priority task may, however. become in the meantime to have a higher priority degree that the variable priority task put in the interrupted state. The variable priority task under consideration and the other variable priority task will be termed first and second variable priority tasks.

When the invariable priority task is put in the sleeping state, the task scheduler 18 selects under the circumstances the second variable priority task instead of the first variable priority task which must be selected for restart of the execution. Switching of the first variable priority task to the invariable priority task is therefore prohibited until the first variable priority task is put in the sleeping state. In other words, prohibition of task switching is mandatory in order to insure that the task scheduler 18 may not select the second variable priority task for execution but that the execution should be restarted for the first variable priority task. After all, a time delay has been inevitable on switching a variable priority task to an invariable priority task.

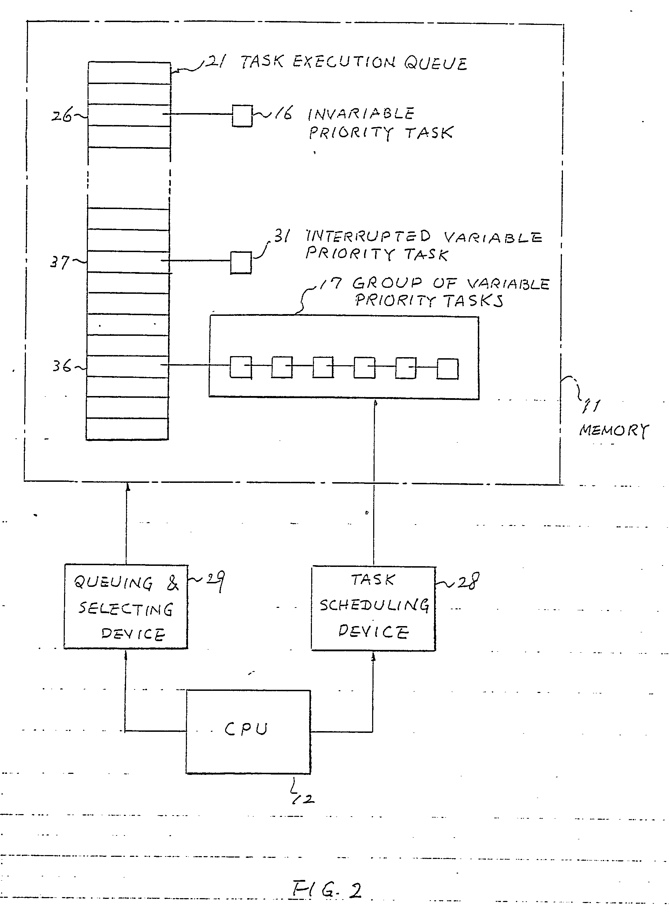

Referring now to Fig. 2, the description will proceed to an information processing system which includes a task switching or managing arrangement according to a first embodiment of the present invention. Like in Fig. 1, the information processing system comprises a memory 11 and a central processing unit 12 and is for executing in a time division or time-sharing fashion a plurality of tasks formed in the memory 11. It should be noted that only a few of the tasks are depicted in the figure. For example, only one of the invariable priority tasks is depicted at 16. Only a group of variable priority tasks is illustrated at 17.

As before, the invariable and the variable priority tasks have the invariable and the variable priority degrees described before. At a time, each of the invariable and the variable priority tasks is in one of the execution, the waiting, the interrupted, and the sleeping states defined before. Some or all of the invariable priority tasks which are in the waiting state, will be called the waiting tasks. The variable priority tasks of the group 17 are simultaneously put in the waiting state.

In the manner described in conjunction with Fig. 1, the task switching arrangement comprises a task execution queue 21 in the memory 11. The task execution queue 21 has a plurality of priority levels, such as 256 priority levels. It should be understood that a highest level of the priority levels is depicted in the figure at the top of the task execution queue 21 and a lowest priority level, at the bottom.

Being operable a little different from the task scheduler 18 described in conjunction with Fig. 1, a task scheduling device 28 is depicted outwardly of the memory 11. The scheduling device 28 is implemented by a part of an operating system which runs on the central processing unit 12. Alternatively, the scheduling device 28 is implemented by hardware which is controlled by the central processing unit 12.

The task scheduling device 28 is different from the task scheduler 18 particularly in that the scheduling device 28 arranges or rearranges the variable priority tasks in the group 17 from time to time in a descending priority order of the variable priority degrees. Stated otherwise, the descending priority order is refreshed or renewed from time to time. The variable priority tasks are therefore depicted in the group 17 by small squares which are connected to one another by short horizontal lines.

A queuing and selecting device 29 is operable somewhat different from the queuing and selecting device 22 described in connection with Fig. 1. Like the queuing and selecting device 22, the queuing and selecting device 29 is coupled to the task execution queue 21 and is referred to either as an invariable priority task switching device or briefly as a switching device. The switching device 29 is implemented either by hardware controlled by the central processing unit 12 or by another part of the operating system which runs on the central processing unit 12 and includes the above-mentioned part in implementing the task scheduling device 28.

The switching device 29 is for queuing the waiting tasks in the selected levels of the task execution queue 21 as the queued tasks as before. When the invariable priority task 16 is in the waiting state, the switching device 29 queues the task 16 in one of the priority levels that is selected in accordance with its invariable priority degree, is again indicated at 26, and will now be called a prescribed level.

On queuing the waiting tasks in this manner, it is necessary to know whether or not each invariable priority task is in the waiting state. A device for selecting the waiting tasks from other invariable priority tasks, is not depicted because such a device is known and is out of the scope of this invention. This applies to a device for judging whether or not the variable priority tasks of the group 17 are in the waiting state.

In the manner known in the art and described above, the switching device 29 searches down the priority levels of the task execution queue 21 to find a queued task which is queued atop or ahead in the highest selected level described before. It will be surmised in connection with the example being illustrated that the prescribed level 26 is the highest selected level and that the invariable priority task 16 is first found as a selected task. The switching device 29 dequeues the task 16 from the prescribed level for execution. The task 16 is put in the execution state in the known manner to be put into the sleeping state in due course. The prescribed level 26 becomes empty or vacant if no other waiting task is queued in the prescribed level 26. In other words, the prescribed level 26 becomes a mere or empty priority level.

It will now be assumed that the switching device 29 has somehow or other found one of the variable priority tasks of the group 17 for execution that is in the waiting state and has its variable priority degree as a highest degree of all the invariable and the variable priority tasks which are in the waiting state. The variable priority task under consideration will be named a first priority task and be designated by a reference numeral 31. The scheduling device 28 forcibly raises the invariable priority degree of the task 31 up to a raised priority degree until the task 31 is later put in the sleeping state. In the manner which will become clear as the description proceeds, the raised priority degree is higher than the common priority degree of other or remaining variable priority tasks of the group 17 from only one priority level to several priority levels.

In marked contrast to the switching device 22 described with reference to Fig. 1, the switching device 29 queues the variable priority task group 17 in a first predetermined level 36 of the priority levels of the task execution queue 21 with reference to the common priority degree. When the first priority task 31 is put in the interrupted state in the manner which will presently be described, the switching device 29 queues the task 31 atop or ahead in a second predetermined level 37 of the task execution queue 21 in consideration of the raised priority degree. The first and the second predetermined levels 36 and 37 are therefore lower and higher relative to each other among the priority levels. Inasmuch as the predetermined levels 36 and 37 are two of the priority levels to which executable tasks are queued, the switching device 29 deals with the levels 36 and 37 as two selected levels. It should be noted in this connection that the level 36 or 37 is deemed as none of the selected levels as the case may be.

It is now understood in any event that the first priority task 31 can be selected as the selected task by the switching device 29 like one of the invariable priority tasks which are in the waiting state. The switching device 29 can dequeue the task 31 from the task execution queue 21 for execution. The task switching arrangement is therefore capable of unifiedly dealing with the invariable and the variable priority tasks. It should moreover be understood that a small square 31 indicates an interrupted task which is one of the variable priority tasks of the group 17, was previously subjected to execution, is now in the interrupted state, as a result of appearance of an invariable priority task, such as 16, of a higher priority degree, with the execution carried out to a certain exetent.

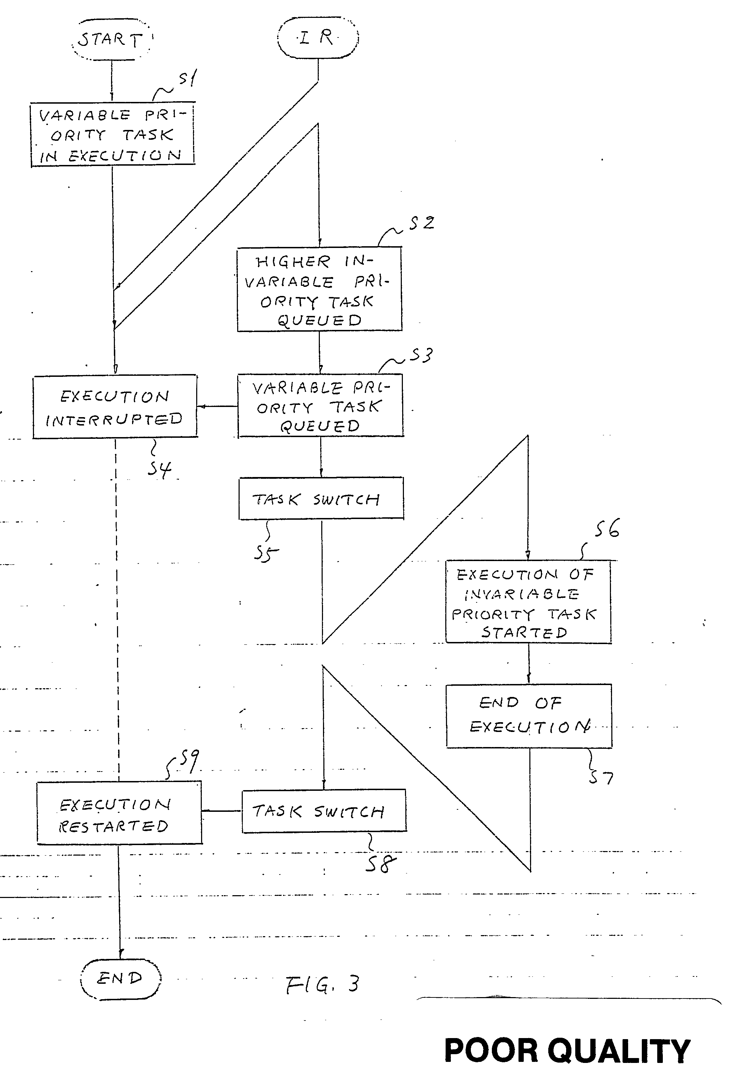

Referring to Fig. 3 in addition to Fig. 2, it will be presumed at a certain instant of time that the first priority task 31 is in the waiting state and has a highest variable priority degree among the tasks of the group 17 and that the switching device 29 has selected the task 31 as the selected task after having queued the task 31 as the queued task atop in the first predetermined level 36 with other variable priority tasks of the group 17 queued also in the first predetermined level 36. The switching device 29 dequeues the task 31 from the first predetermined level 36 for execution. The task scheduling device 28 raises the invariable priority degree of the task 31 forcibly up to the raised priority degree.

The fact should be understood in this regard that the switching device 29 shifts the selected levels upwardly of the priority levels of the task execution queue 21 when the switching device 29 successively dequeues the selected tasks from the task execution queue 21 for execution. The highest priority level thereore moves downwardly of Fig. 2. On so shifting the selected levels, the switching device 29 should leave a predetermined number of mere or empty priority levels above a new highest selected level. For example, such mere priority levels should be left for use in queuing an invariable and a variable priority task in two of the mere priority levels, in the manner which will shortly be described, when the first predetermined level 36 becomes the new highest selected level.

At a first step S1, the first priority task 31 is in the execution state. It will be assumed that an interruption request IR enters during execution of the task 31 and that one of the invariable priority tasks becomes executable in the meantime to have an invariable priority degree higher than the highest variable priority degree which may be had by the variable priority tasks of the group 17, the task 31 inclusive. When the invariable priority task under consideration is the invariable priority task 16, the switching device 29 queues the task 16 in the prescribed level 26 at a second step S2. If the prescribed level 26 is higher than the current highest priority level of the task execution queue 21, the switching device 29 shifts the selected levels downwardly of the priority levels so that the prescribed level 26 should be included in the task execution queue 21 in the manner exemplified in Fig. 2.

As soon as the invariable priority task 16 is queued in the prescribed level 26, the switching device 29 selects the task 16 as the selected task and queues the first priority task 31 at a third step S3 atop in the second predetermined level 37. Execution of the first priority task 31 is interrupted in the known manner at a fourth step S4. Task switching takes place at a fifth step S5 from the first priority task 31 to the invariable priority task 16. The first priority task 31 becomes the interrupted task mentioned above.

The switching device 29 dequeues the invariable priority task 16 from the prescribed level 26 for execution. The task 16 is put in the execution state at a sixth step S6. In due course, execution of the task 16 proceeds to its full extent. Termination of the execution is indicated at a seventh step S7. The switching device 29 again selects the first priority task 31 as the selected task with the second predetermined level 37 found as the highest selected level. Task switching takes place at an eighth step S8 from the invariable priority task 16 back to the first priority task 31. In the manner known in the art, execution of the task 31 is restarted at a ninth step S9 from the extent to which the execution proceeded when interrupted at the fourth step S4.

It should be pointed out in connection with Figs. 2 and 3 that other or remaining variable priority tasks of the group 17 other than the first priority task 31, are queued in the first predetermined level 36 however high their respective variable priority degrees may vary. The first predetermined level 36 is lower than the second predetermined level 37. The switching device 29 therefore selects the first priority task 31 without fail upon termination of execution of the invariable priority task 16 at the seventh step S7. Prohibition of task switching from a variable priority task to an invariable priority task is therefore unnecessary. As a consequence, the task switching arrangement has little time delay on switching a variable priority task to an invariable priority task.

Incidentally, one of the other variable priority tasks of the group 17 will be named a second priority task. As a result of relative variation of the variable priority degrees, the second priority task may become to have a higher variable priority degree than the first priority task 31 while execution of the task 31 is in progress. Even in this event, the first priority task 31 is switched to the second priority task after termination of execution of the task 31. This task switching between the variable priority tasks is not different from that carried out by the conventional task switching arrangement.

Reviewing Fig. 2, a few priority levels are present between the first and the second predetermined levels 36 and 37. When at least one invariable priority task is in the waiting state and is queued in the priority level between the predetermined levels 36 and 37, the switching device 29 selects such an invariable priority task as the selected task and dequeues the selected task from the task execution queue 21 for execution after restart and termination of execution of the first priority task 31. After execution of such invariable priority task or tasks is carried out to full extent, the switching device 29 selects the other variable priority tasks of the group 17 in accordance with the descending priority order.

In Figs. 2 and 3, it is likely that one of the other or remaining variable priority tasks of the group 17, such as the second priority task, should be put into the interrupted state in order to switch the variable priority task in question to an invariable priority task. When put in the interrupted state, the variable priority task under consideration is queued in a higher priority level, such as the second predetermined level 37, than the first predetermined level 36. The switching device 29 selects that variable priority task without fail upon restart of execution of the variable priority task.

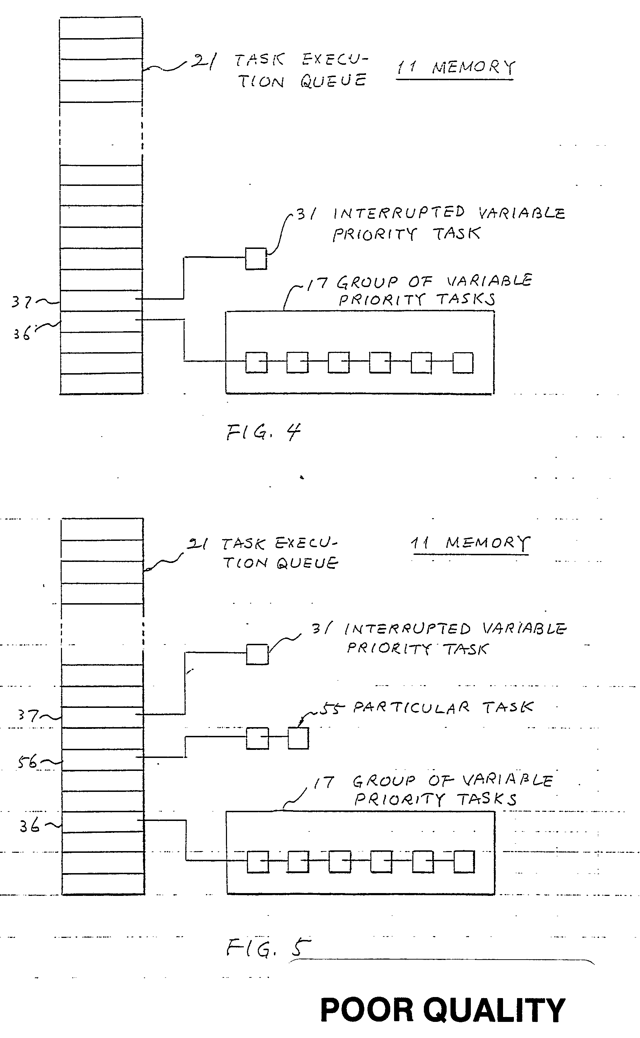

Turning to Fig. 4, the second predetermined level 37 is next higher than the first predetermined level 36. When the first priority task 31 alone is queued in the second predetermined level 37 upon interruption of execution of the task 31, the switching device 29 selects the other variable priority tasks of the group 17 according to the descending priority order immediately after execution of the task 31 is restarted and carried out to the full extent.

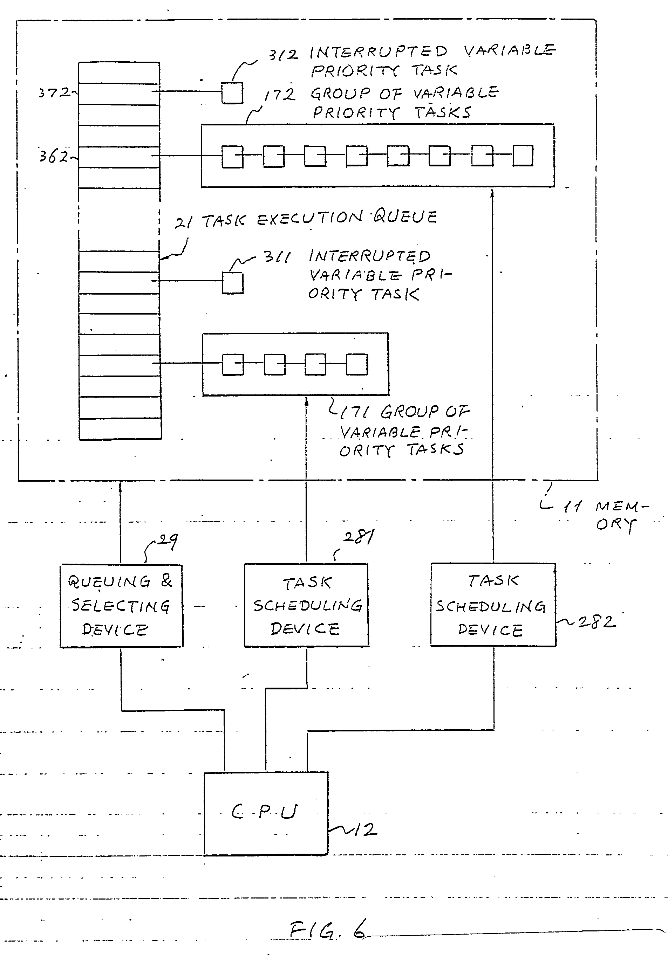

Referring to Fig. 5, attention will be directed to an information processing system which includes a task switching or managing arrangement according to a second embodiment of this invention. The information processing system and the task switching arrangement comprise similar parts which are designated by like reference numerals and are similarly operable with likewise named levels of the task execution queue 21 and with likewise named tasks formed in the memory 11.

A particular task 55 is a variable priority task and consists of two tasks in the illustrated example. Such two tasks have a common invariable priority degree, which is herein called a particular priority degree. The particular task 55 is, for example, a monitoring task for use in monitoring the information processing system. As an alternative, the particular task 55 is either a debugging task or a demon task.

As soon as the particular task 55 is put in the waiting state, the switching device 29 queues the particular task 55 in a particular level 56 by selecting the particular level 56 from the priority levels of the task execution queue 21 in compliance with the particular priority degree. It will be presumed that the first and the second predetermined levels 36 and 37 are selected lower and higher than the particular level 56. In the manner described with review of Fig. 2, the particular task 55 is executed each time when one of the variable priority tasks of the group 17 is put in the sleeping sate, after put in the interrupted state, to be switched to another of the variable priority tasks of the group 17.

Referring finally to Fig. 6, attention will be directed to an information processing system which includes a task switching or managing arrangement according to a third embodiment of this invention. In the manner described in the foregoing, the information processing system and the task switching arrangement comprise similar parts which are designated by like reference numerals and are similarly operable with likewise named levels and tasks.

In the tasks formed in the memory 11, a plurality of groups of variable priority tasks are concurrently in the waiting state. In the example being illustrated, the variable priority tasks of first and second groups 171 and 172 are simultaneously in the waiting state. First and second task scheduling devices 281 and 282 are used in administrating or managing the first and the second groups 171 and 172, respectively, and are controlled by the central processing unit 12.

The variable priority task switching device 29 is used in queuing the first group 171 in a first primary predetermined level 361 with the level 361 selected from the priority levels of the task execution queue 21 and successively selects the variable priority tasks of the first group 171 according to the descending priority order which is refreshed or renewed from time to time by the first scheduling device 281. In a similar manner, the variable priority tasks of the second group 172 are queued in a first secondary predetermined level 362 of the priority levels and are successively selected to be dequeued for execution. When one of the variable priority tasks of the first group 171 is put in the execution state, the first task scheduling device 281 raises its invariable priority degree to a first raised priority degree. When the variable priority task under consideration becomes a first interrupted task 311, the switching device 29 queues the interrupted task 311 in a second primary predetermined level 371 of the priority levels. When one of the variable priority tasks of the second group 172 becomes a second interrupted task 312, the switching device 29 queues the second interrupted task 312 in a second secondary predetermined level 372.

It is now obvious that the task switching arrangement is operable with two or more operating systems which are caused to simultaneously run on the central processing unit 12. In the manner described above as regards the particular task 55 with reference to Fig. 5, it is possible to queue a particular task in one of the priority levels of the task execution queue 21 that is selected either between the first and the second primary predetermined levels 361 and 371 or between the first and the second secondary predetermined levels 362 and 372. Alternatively, two or more particular tasks can be queued between the first and the second primary predetermined levels 361 and 371 and between the first and the second secondary predetermined levels 362 and 372.

While this invention has thus far been described in specific conjunction with a few preferred embodiments thereof, it will now be readily possible for one skilled in the art to carry this invention into effect in various other manners. For example, it is possible to implement the invariable priority task switching device 29 separately by a queuing device and an invariable priority task selecting device. It should, however, be noted that the queuing device and the selecting device should be operatively coupled to each other.

## Claims

1. In a task switching arrangement for use in an information processing system capable of executing a plurality of tasks in a time division fashion, said tasks including a group of variable priority tasks having priority degrees variable with time, said task switching arrangement comprising a task execution queue having a plurality of priority levels and queuing and selecting means coupled to said task execution queue for queuing in selected levels as queued tasks invariable priority tasks having invariable priority degrees and waiting execution with said selected levels selected from said priority levels according to the respective invariable priority degrees and for selecting as a selected task for execution the queued task queued in one of said selected levels that becomes highest of said selected levels, the improvement wherein said queuing and selecting means is for furthermore queuing said group of variable priority tasks in a first predetermined level and an interrupted task in a second predetermined level with said first and second predetermined levels selected from said priority levels lower and higher relative to each other, said interrupted task being one of said variable priority tasks that is in interrupted state, said queuing and selecting means selecting the variable priority tasks of said group collectively as said selected task and said interrupted task as said selected task when said first and said second predetermined levels become higher, respectively, than said selected levels.

2. A task switching arrangement as claimed in Claim 1, further comprising scheduling means operatively coupled to said group of variable priority tasks for arranging said variable priority tasks in a descending order of said variable priority degrees from time to time.

3. A task switching arrangement as claimed in Claim 2, said variable priority tasks of the group having a common priority degree which is invariable with time unless forcibly changed, wherein said queuing and selecting means is for selecting said first predetermined level with reference to said common priority degree.

4. A task switching arrangement as claimed in Claim 3, wherein:
said scheduling means is for forcibly giving said interrupted task a higher priority degree than said common priority degree when said interrupted task is selected as said selected task before put in said interrupted state;
said queuing and selecting means being for selecting said second predetermined level with reference to said higher priority degree.

5. A task switching arrangement as claimed in any of Claims 1 to 4, said plurality of tasks including a particular task having a particular priority degree, wherein said queuing and selecting means is for queuing said particular task in a particular level with said particular level selected from said priority levels according to said particular priority degree, for selecting said first and said second predetermined levels lower and higher than said particular level, and for selecting said particular task as said selected task when said particular level becomes higher than said selected levels.

6. A task switching arrangement as claimed in any of Claims 1 to 5, said plurality of tasks including a plurality of groups of variable priority tasks having variable priority degrees variable with time, wherein said queuing and selecting means is for queuing each of said groups in a first preselected level with said first preselected level selected from said priority levels and for selecting the variable priority tasks of said each of the groups collectively as said selected task when said first preselected level becomes higher than said selected levels, said queuing and selecting means being for furthermore queuing an interrupted one of the variable priority tasks of said each of the groups in a second preselected level with said second preselected level selected in said priority levels higher than said first preselected level and for selecting said interrupted one of the variable priority tasks as said selected task when said second preselected level becomes higher than said selected levels.

21 TASK EXECUTION QUEUE

26

16 TASK

18 TASK SCHEDULER

17 TASK GROUP

27

11 MEMORY

QUEUING & SELECTING DEVICE

22

C P U

12

PRIOR ART

FIG. 1

**POOR QUALITY**

21 TASK EXECUTION QUEUE

26 — 16 INVARIABLE PRIORITY TASK

31 INTERRUPTED VARIABLE PRIORITY TASK

17 GROUP OF VARIABLE PRIORITY TASKS

37 —

36 —

11 MEMORY

QUEUING & SELECTING DEVICE — 29

TASK SCHEDULING DEVICE — 28

CPU — 2

FIG. 2

**POOR QUALITY**

FIG. 3

**POOR QUALITY**

21 TASK EXECU-
TION QUEUE   11 MEMORY

31 INTERRUPTED VARIABLE
PRIORITY TASK

17 GROUP OF VARIABLE
PRIORITY TASKS

37

36

FIG. 4

21 TASK EXECU-
TION QUEUE   11 MEMORY

31 INTERRUPTED VARIABLE
PRIORITY TASK

55 PARTICULAR TASK

17 GROUP OF VARIABLE
PRIORITY TASKS

37

56

36

FIG. 5

**POOR QUALITY**

FIG. 6

**POOR QUALITY**